# EUROPÄISCHE PATENTSCHRIFT

(11) **EP 1 039 045 B1**
(45) Veröffentlichungstag und Bekanntmachung des Hinweises auf die Patenterteilung: **12.05.2004**
(21) Anmeldenummer: 00105619.1
(22) Anmeldetag: 16.03.2000
(51) Int. Cl.: E03C 1/042

(54) **Rosette für einen Wandanschlussteil einer sanitären Armatur**
Rosette for a wall mounting part of a sanitairy fitting
Rosette pour une partie de raccordement à une paroi d'une armature sanitaire

(30) Priorität: 20.03.1999 DE 19912697
(43) Veröffentlichungstag der Anmeldung: 27.09.2000
(73) Patentinhaber: Hansgrohe AG, 77761 Schiltach (DE)
(72) Erfinder: Lorch, Werner, 78713 Schramberg (DE); Brunner, Roland, 77761 Shiltach (DE)
(74) Vertreter: Patentanwälte Ruff, Wilhelm, Beier, Dauster & Partner

(56) Entgegenhaltungen:
- EP-A- 0 392 176
- DE-A- 3 806 492
- FR-A- 2 550 250

## Beschreibung

### ANWENDUNGSGEBIET UND STAND DER TECHNIK

Die Erfindung betrifft eine Rosette für einen Wandanschlußteil einer sanitären Armatur gemäß dem Oberbegriff des Anspruchs 1.

Eine Rosette dieser Art ist aus der DE 38 06 492 bekannt. Dabei wird die Rosette vor der Befestigung der Armatur auf diese bzw. einen Stutzen des Wandanschlußteils aufgeschoben und nach Befestigung der Armatur in ihrer endgültigen Position auf einer Manschette fixiert. Bei den üblichen Dimensionierungen, insbesondere der Länge des Stutzens, wird es als aufwendig und zeitraubend angesehen, die Armatur samt Rosette auf diese Weise zu montieren.

Die EP 0392176 zeigt eine runde Rosette, die zweigeteilt ist. Ein grösserer Teil ist mit einem Langloch versehen zum Aufschieben über einen Rohrstutzen. Das Langloch wird mit einem entsprechenden Verschluss geschlossen. Insgesamt wird die Rosette mittels zweier Befestigungsschrauben an die Wand geschraubt.

### AUFGABE UND LÖSUNG

Es ist Aufgabe der Erfindung, eine Rosette der vorgenannten Art zu schaffen, bei der die Montage sowohl der sanitären Armatur als auch der Rosette vereinfacht ist, wobei die Rosette vielseitig verwendbar sowie einfach herstellbar sein soll.

Diese Aufgabe wird gelöst mit einer Rosette mit den Merkmalen des Anspruchs 1. Durch die Teilung ist es möglich, die Rosette nach Art eines geöffneten Rings über den Stutzen bzw. die Manschette zu führen. Die Verbindungsmittel ermöglichen es, die Rosette nach Anbringung zu schließen, um sie als eine, insbesondere einteilige bzw. geschlossene, Baueinheit erscheinen zu lassen.

Bevorzugt besteht die geteilte bzw. teilbare Rosette aus wenigstens zwei voneinander separierbaren Teilen. Separierbar kann hier bedeuten, daß die Teile nicht zusammenhängen. Besonders bevorzugt besteht sie aus zwei Teilen, die vorzugsweise als Halbschalen ausgebildet sein können. Vorteilhaft kann die Rosette im geteilten Zustand in radialer Richtung über den Stutzen und/oder die Manschette bringbar ausgebildet sein bzw. geführt werden. So ist es möglich, die Teile der Rosette von außen um den Stutzen zu legen. Gemäß einer alternativen Ausführung ist es möglich, die Rosette einteilig aus wenigstens zwei zusammenhängenden und gegeneinander bewegbaren Teilen zu bilden. Dabei können die Teile vorzugsweise über eine Verbindung, beispielsweise nach Art einer Materialbrücke oder eines Folienscharniers o. dgl., miteinander verbunden sein. Eine derartige Rosette kann nach Art eines Rings mit Scharnier geöffnet werden, über den Stutzen geführt und anschließend wieder geschlossen werden.

Bevorzugt gehen die Verbindungsmittel bei der Aufbringung, insbesondere in der Endphase derselben, die Wirkverbindung miteinander ein bzw. schließen die Rosette zusammen. Ein kombiniertes Aufbringen/Verbinden ermöglicht eine besonders einfache Montage der Rosette in nur einem Arbeitsgang.

Die Verbindungsmittel der Rosette können kraftschlüssig und/oder formschlüssig ausgebildet sein, vorteilhaft sind Kombinationen einer Kraftschlüssigkeit mit einer gewissen Formschlüssigkeit. Unter Kraftschluß wird hier eine Verbindung verstanden, die im wesentlichen ohne Zerstörung des Materials bzw. der Verbindungsmittel wieder gelöst werden kann. Ein verwendeter Formschluß ist vorteilhaft ebenso im wesentlichen zerstörungsfrei wieder lösbar, allerdings ist in der Regel eine Kraft zur Verformung der Verbindungsmittel zum Lösen des Formschlusses notwendig. Eine Ausführungsmöglichkeit für Verbindungsmittel kann vorteilhaft ein ineinandergreifendes System von Vorsprüngen und Vertiefungen bzw. Ausnehmungen sein, beispielsweise nach Art von Sägezähnen. Weitere Verbindungsmöglichkeiten können Stifte bzw. Bolzen o.dgl. sein, die in entsprechende Ausnehmungen in Verbindungsrichtung eingreifen und beispielsweise durch eine gewisse Klemmwirkung die Verbindung halten. Des weiteren ist es möglich, eine Verbindung durch Verkleben herzustellen.

Die Teile der Rosette weisen vorteilhaft Führungsmittel auf, die ein Verschieben der Rosettenteile in axialer und/oder radialer Richtung gegeneinander verhindern sollen. Die Führungsmittel sind vorzugsweise an einem axialen Endbereich, insbesondere an beiden Endbereichen, vorgesehen. Eine Ausführungsmöglichkeit für Führungsmittel können o.g. Stifte oder Vorsprünge sein, die in Führungsrichtung in entsprechende Ausnehmungen einfahren. Eine weitere Möglichkeit ist eine ineinandergreifende Verschränkung, beispielsweise als zwei rechtwinklig verlaufende, mit Schlitzen in Führungsrichtung versehene Zungen, wobei beim Verbinden der Rosettenteile die Schlitze ineinanderfahren und jeweils die Zungen übergreifen. Der Herstellungsaufwand läßt sich dadurch reduzieren, daß die Führungsmittel ein Teil der Verbindungsmittel sind bzw. diese bilden.

Die Rosette wird mittels eines Innengewindes über ein Außengewinde der Manschette in axialer Richtung mit dieser festgelegt. Das Innengewinde ist im Bereich der Durchgangsöffnung der Rosette, insbesondere in einem axialen Endbereich, angebracht. Das Außengewinde der Manschette erstreckt sich zumindest teilweise, insbesondere vollständig, längs ihres Außenumfangs.

Die Teile der Rosette sind von der Außenform her gleich bzw. vorteilhaft identisch. Die Teile der Rosette sind in ihrer Gesamtheit im wesentlichen gleich. Bevorzugt sind die Rosettenteile identisch ausgebildet, so daß zu ihrer Herstellung lediglich ein Werkzeug benötigt wird. Das Innengewinde der Rosette kann, insbesondere um die Rosettenteile identisch auszubilden, ein Gewinde mit einer geraden Zahl von Gängen sein, insbesondere ein zweigängiges Gewinde. Die Anfänge der Gewinde bzw. der Gewindegänge liegen bevorzugt im Bereich der Verbindung der Rosettenteile miteinander. Das Außengewinde der Manschette kann ein zu dem Innengewinde der Rosette korrespondierendes Gewinde sein, um eine exakte Paßform zu gewährleisten, insbesondere ein zweigängiges Gewinde. Gemäß einer alternativen Ausführung hat es sich gezeigt, daß es möglich ist, bei einem zweigängigen Rosettengewinde das Außengewinde der Manschette als Gewinde mit einer ungeraden Zahl von Gängen bzw. als eingängiges Gewinde auszubilden. Dabei ist zu beachten, daß die Steigung der Gewindegänge der Manschette der Steigung der Gewindegänge der Rosette entspricht. Überraschenderweise kann eine solche eingängige Manschette in ein zweigängiges Innengewinde eingedreht werden, wenn auch ein gewisser Schrägversatz der Manschette in Kauf zu nehmen ist. Bevorzugt ist hierbei das Außengewinde der Manschette mit einem etwas kleineren Durchmesser, insbesondere im Bereich einiger weniger Prozent, als das theoretisch zum Innengewinde vorgeschriebene ausgeführt. Der große Vorteil einer solchen eingängigen Manschette liegt darin, daß bereits in Produktion befindliche bzw. vorhandene Manschetten für Rosetten mit eingängigem Gewinde genutzt werden können. So lassen sich Aufwand für Lagerhaltung und Verwechslungsgefahr bei den Manschetten verringern bzw. vermeiden.

Das Gewinde an der Rosette kann von ihrer Innenseite abstehende Gewindegänge aufweisen, vorzugsweise nach Art abstehender schmaler Stege. Es ist möglich, bei dem Innengewinde nur jeden zweiten Gewindegang auszubilden, wobei die Gewindegänge vorzugsweise entlang der Trennebene von Rosettenteilen zueinander versetzt sind. Dies ist insbesondere bei einem eingängigen Außengewinde der Manschette und einem zweigängigen Innengewinde der aufzuschraubenden Rosette von Vorteil, da hierdurch verbesserte Ausgleichsmöglichkeiten der Gewinde zueinander geschaffen werden können.

Vorteilhaft weist die Rosette an ihrer Innenseite in konstantem Abstand von dem im montierten Zustand der Wand zugewandten Ende eine nach innen abstehende, im wesentlichen umlaufende Anlage auf. Sie kann aus einzelnen Vorsprüngen oder bevorzugt als Schulter o.dgl. ausgebildet sein. An die Anlage ist eine Dichtung gegen die Wand einlegbar bzw. befestigbar, wobei diese Dichtung vorzugsweise entsprechend der Rosette in Umfangsrichtung auftrennbar ist. So ist es möglich, die Dichtung bereits in den Rosettenteilen zu montieren. Geschlossen wird die Dichtung beim Verbinden der Rosettenteile.

Die Manschette besteht vorzugsweise aus elastischem, formveränderbaren Material, wobei es insbesondere gummielastisch sein kann. Dadurch kann die Manschette als ausgleichendes Teil zwischen Stutzen und Rosette dienen, wobei eine gewisse Elastizität vor allem bei dem o.g. Fall der Unterschiedlichkeit der Gewinde der Rosette und der Manschette von großem Vorteil ist. Die Manschette kann stramm auf dem Stutzen sitzen, beispielsweise als Dichtung, wobei sie insbesondere durch das Darüberführen bzw. Aufschrauben der Rosette verformbar bzw. andrückbar und abdichtend ist. Ein Festlegen der Manschette gegenüber dem Stutzen kann durch eine im Bereich ihres der Wand zugewandten Endes nach innen weisende Schulter o.dgl. erzielt werden. Diese Schulter kann an einer zur Wand gerichteten entsprechenden Schulter des Stutzens in Anlage kommen. Wird die Rosette auf die Wand zu auf dem Stutzen geführt bzw. über die Manschette geschraubt, so versucht sie, die Manschette von der Wand wegzudrücken, was durch die vorgenannte Anlageschulter verhindert wird.

Vorteilhaft weist die Rosette an ihrer Innenseite verlaufende Versteifungsrippen auf. Die Versteifungsrippen verlaufen bevorzugt zumindest in Umfangsrichtung, insbesondere auch zum Teil in axialer Richtung, wobei sie vorzugsweise beim Zusammenfügen der Rosettenteile miteinander verbunden werden können bzw. ineinandergreifen.

Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ein Ausführungsbeispiel der Erfindung ist in den Zeichnungen dargestellt und wird im folgenden näher erläutert. In den Zeichnungen zeigen:
Fig. 1 einen Schnitt durch den Anschluß einer Armatur und die Rosette,
Fig. 2 die Innenansicht einer Rosettenhälfte,
Fig. 3 eine Schrägsicht der Rosettenhälfte aus Fig.2,
Fig. 4 einen Schnitt durch die Manschette und
Fig. 5 eine Schrägansicht der Manschette.

### DETAILLIERTE BESCHREIBUNG DES AUSFÜHRUNGSBEISPIELS

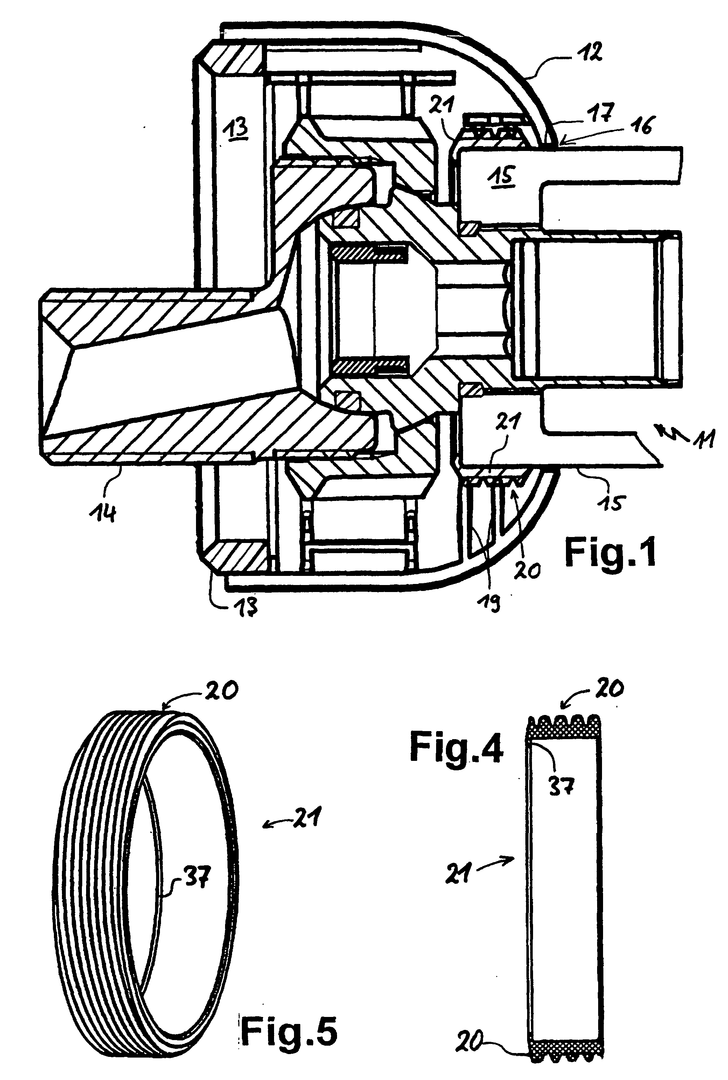

Die Fig. 1 zeigt einen Schnitt durch eine sanitäre Armatur 11 entlang der hälftigen Teilung der Rosette 12. Die Rosette 12 weist in Fig. 1 links beginnend einen zylindrischen Verlauf auf, wobei sie im montierten Zustand mit einer fünfeckigen Dichtung 13 gegen eine Wand anliegt, aus der ein Anschluß 14 für die Armatur 11 ragt. Dieser zylindrische Bereich verjüngt sich nach rechts auf die Armatur 11 zu in etwa rund und umschließt mit dem Rand 17 einer Durchgangsöffnung 16 die Armatur 11 bzw. deren zylindrischen Stutzen 15.

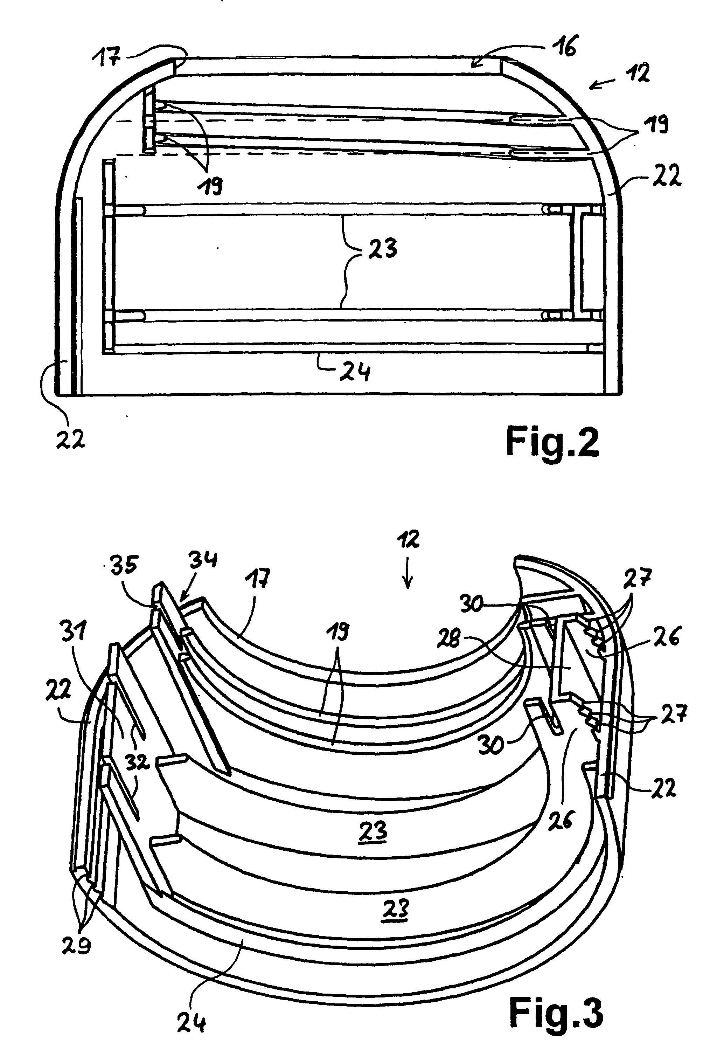

In dem sich nach innen an die Durchgangsöffnung 16 anschließenden Bereich weist die Rosette 12 zwei abstehende Gewindestege 19 auf. Details der Ausbildung der Gewindestege 19 ergeben sich aus den Figuren 2 und 3. Die Gewindestege 19 greifen in ein Außengewinde 20 einer Manschette 21, die an dem Stutzen 15 der Armatur 11 anliegt. Details zur Ausbildung der Manschette 21 ergeben sich aus den Figuren 4 und 5. Im wesentlichen ist in Fig. 1 zu erkennen, daß die aus zwei Rosettenhälften 12 zusammengefügte Rosette über einem Anschluß 14 an einer Wand anliegt und aus ihr lediglich der zylindrische Stutzen 15 der Armatur 11 herausragt.

Die Fig. 2 zeigt eine detaillierte Innenansicht einer hälftigen Rosette 12, die so ausgebildet ist, daß zwei identische Hälften zusammengefügt eine komplette Rosette ergeben. Zu erkennen sind anschließend an die Durchgangsöffnung 16 die beiden im wesentlichen umlaufenden Gewindestege 19, deren Durchmesser über dem der Durchgangsöffnung liegt. Sie verlaufen ihrer Gewindesteigung entsprechend schräg, wobei sie Teil eines zweigängigen Gewindes sind. Aufgrund der Steigung verläuft theoretisch zwischen den beiden dargestellten Gewindestegen 19 ein weiterer paralleler. Es ist also nur jeder zweite Gewindegang pro Rosetttenhälfte 12 ausgebildet. Auf diese Weise kann die oben erwähnte Aufschraubbarkeit einer Rosette mit einem zweigängigen Gewinde auf eine Manschette 21 mit einem eingängigen Gewinde 20 erreicht werden. Die fehlenden Gewindestege müßten am rechten Rand der Rosettenhälfte 12 auf der Höhe beginnen, auf der die Gewindestege 19 am linken Rand der Rosettenhälfte enden, dies ist durch die Strichlinierung angedeutet. Somit sind die Gewindestege pro Rosettenhälfte 12 jeweils abwechselnd ausgebildet, beispielsweise in einer Hälfte jeweils der 1., der 3. usw. und in der anderen Hälfte der 2., der 4. usw.

Bei einer eingängigen Manschette 21 und zweigängigen Gewindegängen 19 der Rosettenhälfte 12 werden die Unterschiede der Gewinde bei gleichen Gewindesteigungen dadurch ausgeglichen, daß in den Rosettenhälften 12 jeweils abwechselnd jeder zweite Gewindesteg nicht ausgebildet ist sowie die Manschette 21 aus einem verformbaren und/oder elastischen Material, beispielsweise Gummi, besteht. Ein leichtes Verkanten der Manschette 21 gegenüber der Rosette kann die Verbindungs- bzw. Dichtungswirkung gegenüber dem Stutzen 15 unter Umständen sogar erhöhen.

Mit etwas Abstand zu den Gewindestegen 19 verlaufen zwei Verstärkungsrippen 23 an der Innenseite der Rosettenhälfte 12 entlang, ähnlich den Gewindestegen 19. In etwa zwischen der unteren Verstärkungsrippe 23 und dem unteren Rand der Rosettenhälfte 12 verläuft schließlich entsprechend eine Schulter 24, an der die Dichtung 13 in Fig. 1 in axialer Richtung der Rosette abgestützt ist.

In der Fig. 3 sind vor allem die Verbindungs- und Führungsmittel der Rosettenhälften 12 verdeutlicht. Die Verbindungsmittel weisen jeweils an einer Trennlinie 22 im wesentlichen senkrecht zu der Trennebene abragende Verbindungszungen 26 auf, die entgegen einer Verbindungsrichtung gerichtete Sägezähne 27 tragen. Die Verbindungszungen 26 gehen direkt im Bereich der Trennlinie 22 ab und radial nach innen in die Verstärkungsrippen 23 über, wobei sie zur erhöhten Festigkeit mittels eines Steges 28 untereinander verbunden sind. An diesen Steg 28 anschließend sind in den Verstärkungsrippen 23 Schlitze 30 gebildet, die in ihrer Länge in etwa dem Überstand der Verbindungszungen 26 über die Trennlinie 22 entsprechen.

An ihrem anderen Ende gehen die Verstärkungsrippen 23 in einen Verbindungsansatz 31 über, der in etwa so weit über die Trennlinie 22 übersteht wie die Verbindungszungen 26 und senkrecht zur Ebene der Trennlinie 22 verläuft. Der Verbindungsansatz 31 weist zwei Schlitze 32 auf, die über die Ebene der Trennlinie 22 hinaus bis kurz vor die Rippen 23 in deren exakter Verlängerung laufen. Damit kann der Verbindungsansatz 31 mit seinem mittleren Teil zwischen den Schlitzen 32 zwischen die Schlitze 30 der Verbindungszungen 26 greifen, wobei bei der Verbindung zweier Rosettenhälften 12 zuerst die Schlitze 30 und 32 ineinander laufen. Durch die dadurch gebildete rechtwinklige Verschränkung sowie eine evtl. leicht keilförmige Ausbildung der Schlitze wird zum einen eine sichere und exakte Führung der beiden Rosettenhälften 12 gegeneinander sowohl beim Verbinden als auch im verbundenen Zustand gegen axiales und radiales Verschieben erreicht.

Den Verbindungszungen 26 gegenüber sind an der Innenwandung der Rosettenhälfte 12 mehrere in axialer Richtung verlaufende Sägezahnrippen 29 angeformt, die länger sind als der Abstand der Verbindungszungen 26 zueinander. Die Sägezähne sowohl der Verbindungszungen 26 als auch der Sägezahnrippen 29 weisen bei jeder Rosettenhälfte 12 in dieselbe Richtung, nämlich entgegen der Verbindungsrichtung. Beim Aufeinanderstecken der Rosettenhälften greifen die Verbindungszungen 26 mit den Sägezähnen 27 in die Sägezahnrippen 29 des anderen Rosettenteils ein und bilden somit eine zumindest kraftschlüssige Verbindung, insbesondere auch mit teilweisem Formschluß. Der Abstand des Verbindungsansatzes 31 zu der Innenseite der Rosette, insbesondere zu den Sägezahnrippen 29, ist derart gewählt, daß beim Verbinden zweier Rosettenhälften 12 die Verbindungszungen 26 nicht nur durch ihre eigene Form gegen die Sägezahnrippen 29 gedrückt werden, sondern zusätzlich durch den Verbindungsansatz 31.

Ein weiteres Führungsmittel ähnlicher Art ist nahe der Durchgangsöffnung 16 vorgesehen. Die Gewindestege 19 gehen in Fig. 3 nach links in einen weiteren Ansatz 34 über, der ähnlich dem Verbindungsansatz 31 einen in etwa bis zur Trennebene 22 reichenden Schlitz 35 aufweist. Der Schlitz 35 liegt genau auf der Höhe, in der der näher an der Durchgangsöffnung 16 befindliche Gewindesteg 19 von der rechten Trennlinie 22 der Rosettenhälfte 12 abgeht. Beim Verbinden zweier Rosettenhälften greift der Schlitz 35 über diesen Gewindesteg 19 und sichert die Rosettenhälften zusätzlich gegen axiales Verschieben. Der an die Innenwandung der Rosettenhälfte reichende Teil des Ansatzes 34 fährt zwischen den Gewindegang 19 und die Innenwandung der Rosettenhälfte ein, der andere Teil des Ansatzes zur weiteren Sicherung zwischen die beiden Gewindegänge.

Die Fig. 4 zeigt eine Manschette 21 ähnlich der in Fig. 1 im Schnitt. Zu erkennen ist der im wesentlichen zylindrische Verlauf mit dem Außengewinde 20, das, wie deutlich zu erkennen ist, eingängig ausgeführt ist; jede Gewindeerhebung der oberen Hälfte liegt einer Gewindevertiefung der unteren Hälfte gegenüber und umgekehrt. Am in Fig. 4 linken Ende weist die Manschette 21 eine nach innen weisende Schulter 37 auf, mit der sie an dem Stutzen 15 anliegt.

Die Fig. 5 zeigt zur Veranschaulichung eine Schrägansicht der Manschette 21 aus Fig. 4. Es ist zu erkennen, daß die Manschette 21 im wesentlichen nach Art eines kurzen Rings mit Außengewinde 20 ausgebildet ist.

### FUNKTION

Zur Montage einer sanitären Armatur 11 an einen aus einer Wand ragenden Anschluß 14 wird zuerst die Manschette 21 über den Stutzen 15 geführt und anschließend die Armatur befestigt. Dann wird in die Rosettenhälften 12, falls nicht schon herstellungsseitig erfolgt, die Dichtung 13 eingelegt bzw. eingeklebt. Die Rosettenhälften 12 werden mit Abstand von der über dem Ende des Stutzens 15 befindlichen Manschette 21 über diese durch radiales Zusammenstecken verbunden. Bei diesem Verbindungsvorgang greifen sowohl die Verbindungsmittel in Form der Sägezähne 27 in die Sägezahnrippen 29 als auch die Führungsmittel in Form der Ansätze 31 und 34, Gewindegänge 19 und Verstärkungsrippen 23 in die Schlitze 30, 32 und 35. Abschließend wird die zusammengefügte Rosette mit dem Innengewinde der Gewindestege 19 über das Außengewinde 20 der Manschette 21 geschraubt, bis ihr zylindrischer Bereich mit der Dichtung 13 an der Wand anliegt, bzw. der zylindrische Bereich direkt an der Wand anliegt. Durch das Überschrauben der Rosette über die Manschette 21 wird diese gegen den Stutzen 15 gedrückt bzw. sitzt stramm darauf. Die Schulter 37 verhindert, daß die Manschette 21 in Fig. 1 nach rechts bewegt werden kann.

## Patentansprüche

1. Rosette für einen Wandanschlußteil einer sanitären Armatur, insbesondere einer sanitären Mischarmatur, der einen auf die Wand zu gerichteten, etwa zylindrisch ausgebildeten Stutzen aufweist, wobei die Rosette eine Durchgangsöffnung aufweist und mit dieser zumindest teilweise über eine Manschette auf dem Stutzen führbar ist, wobei die Rosette in Umfangsrichtung in Teile (12) geteilt ist und miteinander in Wirkverbindung bringbare Verbindungsmittel (26, 27, 29) aufweist, **dadurch gekennzeichnet, daß** die Rosette mittels eines Innengewindes (19) über ein Außengewinde (20) der Manschette (21) mit dieser in axialer Richtung festlegbar ist, wobei die Gewinde im Bereich der Durchgangsöffnung (16) der Rosette und am Außenumfang der Manschette vorgesehen sind und wobei die Teile (12) der Rosette im wesentlichen gleich ausgebildet sind.

2. Rosette nach Anspruch 1, **dadurch gekennzeichnet, daß** sie aus wenigstens zwei, insbesondere zwei, voneinander separierbaren Teilen (12) besteht, die vorzugsweise als Halbschalen ausgebildet sind.

3. Rosette nach Anspruch 1 oder 2, **dadurch gekennzeichnet, daß** sie im geteilten Zustand in radialer Richtung über den Stutzen (15) und/oder die Manschette (21) bringbar ist, wobei vorzugsweise bei der Aufbringung die Verbindungsmittel (26, 27, 29) die Wirkverbindung eingehen.

4. Rosette nach wenigstens einem der vorhergehenden Ansprüche, **dadurch gekennzeichnet, daß** die Verbindungsmittel (26, 27, 29) der Rosette kraftschlüssig und/oder formschlüssig sind, wobei die Verbindungsmittel vorzugsweise als ein ineinandergreifendes System von sägezahnartigen Vorsprüngen (27, 29) ausgebildet sind.

5. Rosette nach wenigstens einem der vorhergehenden Ansprüche, **dadurch gekennzeichnet, daß** die Teile (12) der Rosette Führungsmittel (19, 30, 31, 32, 35) gegen ein Verschieben der Teile der Rosette in axialer und/oder radialer Richtung gegeneinander aufweisen, insbesondere ineinandergreifende Verschränkungen, wobei die Führungsmittel vorzugsweise an wenigstens einem axialen Endbereich, insbesondere an beiden Endbereichen, angeordnet sind.

6. Rosette nach Anspruch 5, **dadurch gekennzeichnet, daß** die Führungsmittel (19, 30, 31, 32, 35) ein Teil der Verbindungsmittel (26, 27, 29) sind.

7. Rosette nach wenigstens einem der vorhergehenden Ansprüche, **dadurch gekennzeichnet, daß** die Gewinde in einem axialen Endbereich Durchgangsöffnung (16) der Rosette vorgesehen sind.

8. Rosette nach wenigstens einem der vorhergehenden Ansprüche, **dadurch gekennzeichnet, daß** die Teile (12) der Rosette identisch ausgebildet sind.

9. Rosette nach Anspruch 7 oder 8, **dadurch gekennzeichnet, daß** das Innengewinde (19) der Rosette ein Gewinde mit einer geraden Zahl von Gängen ist, insbesondere ein zweigängiges Gewinde.

10. Rosette nach wenigstens einem der Ansprüche 7 bis 9, **dadurch gekennzeichnet, daß** das Gewinde an der Rosette von deren Innenseite abstehende Gewindegänge aufweist, vorzugsweise nach Art abstehender schmaler Stege (19), wobei insbesondere nur jeder zweite Gewindegang bei einem Teil (12) der Rosette ausgebildet ist, wobei vorzugsweise die Gewindegänge entlang der Trennebene (22) der Teile der Rosette zueinander versetzt sind.

11. Rosette nach wenigstens einem der vorhergehenden Ansprüche, **dadurch gekennzeichnet, daß** die Rosette an der Innenseite in konstantem Abstand von dem in Gebrauchsstellung der Wand zugewandten Ende eine nach innen abstehende, im wesentlichen umlaufende Anlage aufweist, die insbesondere als Schulter (24) o.dgl. ausgebildet ist, wobei an die Anlage eine Dichtung (13) gegen die Wand einlegbar ist, die vorzugsweise entsprechend der Rosette in Umfangsrichtung auftrennbar ist.

12. Rosette nach wenigstens einem der vorhergehenden Ansprüche, **dadurch gekennzeichnet, daß** die Rosette an der Innenseite verlaufende Versteifungsrippen (19, 23, 24) aufweist, die insbesondere in Umfangsrichtung umlaufen, wobei sie vorzugsweise beim Zusammenfügen der Teile (12) der Rosette eine Verbindung eingehen.

## Claims

1. Rosette for a wall outlet component of a sanitary fitting, specifically a sanitary mixer fitting, which exhibits an approximately cylindrical shaped connection piece aligned to a wall, the rosette exhibiting a through opening, which allows it to be moved at least partially via a collar on the connection piece, the rosette being divided into parts (12) in the circumferential direction and exhibits jointing elements (26, 27, 29) that collectively form an effective joint, **characterized in that** the rosette is attached to the collar (21) in an axial direction by means of an internal screw thread (19) via an external screw thread (20) of the collar, the threads being designed to be in the area surrounding the through opening (16) of the rosette and on the external circumference of the collar and the parts (12) of the rosette being formed essentially identical.

2. Rosette in accordance with Claim 1, **characterized in that** it consists of at least two and specifically two separable parts (12), which are preferably formed as shells.

3. Rosette in accordance with Claim 1 or 2, **characterized in that** in its split condition, it can be moved in a radial direction via the connection piece (15) and/or collar (21), preferably the effective joint being created on capture of the jointing elements (26, 27, 29).

4. Rosette in accordance with at least one of the aforementioned claims, **characterized in that** the jointing elements (26, 27, 29) of the rosette are non-positive and/or positive, the jointing elements being formed preferably as an intermeshing system of serrated projections (27, 29).

5. Rosette in accordance with at least one of the aforementioned claims, **characterized in that** the parts (12) of the rosette exhibit guide elements (19, 30, 31, 32, 35) to prevent a mutual shifting of the rosette parts in an axial and/or radial direction, specifically interlocking components, the guide elements being preferably associated to at least one axial end region, specifically to both end regions.

6. Rosette in accordance with Claim 5, **characterized in that** the guide elements (19, 30, 31, 32, 35) form part of the jointing elements (26, 27, 29).

7. Rosette in accordance with at least one of the aforementioned claims, **characterized in that** the threads are designed to be in an axial end region of the opening (16) of the rosette.

8. Rosette in accordance with at least one of the aforementioned claims, **characterized in that** the parts (12) of the rosette are formed identical.

9. Rosette in accordance with Claim 7 or 8, **characterized in that** the internal thread (19) of the rosette is a thread with an even number of turns, specifically is a double-thread.

10. Rosette in accordance with one of the claims 7 to 9, **characterized in that** the thread on the rosette exhibits thread turns projecting from its inside, preferably in the form of projecting narrow bridges (19), specifically only every second thread turn being formed for one part (12) of the rosette, preferably the thread roots being mutually offset along the parting plane (22) of the parts of the rosette.

11. Rosette in accordance with at least one of the aforementioned claims, **characterized in that** the rosette at a constant distant from the end turned towards the wall in the usage position, exhibits on its inside an essentially circumferential unit projecting inwards, which is specifically formed as a shoulder (24) or similar, whereby at the unit, a seal (13) can be inserted against the wall, which can preferably be separated in a circumferential direction in relation to the rosette.

12. Rosette in accordance with at least one of the aforementioned claims, **characterized in that** the rosette exhibits on its inside a series of reinforcing fins (19, 23, 24), which preferably run in a circumferential direction, preferably creating a connection when the parts (12) of the rosette combine.

## Revendications

1. Rosette pour la pièce de raccordement mural d'un robinet sanitaire, notamment d'un robinet sanitaire mélangeur, présentant un tuyau de rallongement de forme approximativement cylindrique à installer sur le mur, la rosette elle-même présentant un trou de passage par lequel elle peut être enfilée au moins partiellement sur une manchette du tuyau de raccordement, étant partagée dans le sens périphérique en deux pièces (12) et possédant des dispositifs de jonction (26, 27, 29) pouvant être assemblés, **caractérisée par le fait que** la rosette peut être fixée dans l'axe avec la manchette (21) au moyen d'un filet femelle (19) recouvrant un filetage mâle (20) de cette dernière, les filetages étant placés au niveau du trou de passage (16) de la rosette et sur le périmètre extérieur de la manchette et les pièces (12) de la rosette étant pour l'essentiel formées de manière identique.

2. Rosette conforme à la revendication 1 **caractérisée par le fait qu'**elle se compose de deux pièces au moins, notamment deux pièces (12) détachables l'une de l'autre et formées de préférence en semi-monocoques.

3. Rosette conforme à la revendication 1 ou 2 **caractérisée par le fait qu'**elle peut, ouverte, être glissée sur le tuyau de rallongement (15) et/ou la manchette (21) en direction radiale, les dispositifs de jonction (26, 27, 29) entrant de préférence en combinaison active lors de la pose.

4. Rosette conforme à au moins l'une des revendications précédentes **caractérisée par le fait que** les dispositifs de jonction (26, 27, 29) sont formés par adhérence et/ou engagement positif, de préférence sous la forme d'un système enchaînant les rebords en saillie (27, 29) en dents de scie.

5. Rosette conforme à au moins l'une des revendications précédentes **caractérisée par le fait que** les pièces (12) de la rosette présentent des dispositifs de guidage (19, 30, 31, 32, 35) chargés d'éviter tout déplacement opposé axial et/ou radial des pièces, notamment un enchaînement d'entrecroisements, les dispositifs de guidage étant placés de préférence à au moins une extrémité axiale, en particulier aux deux extrémités.

6. Rosette conforme à la revendication 5 **caractérisée par le fait que** les dispositifs de guidage (19, 30, 31, 32, 35) constituent une partie des dispositifs de jonction (26, 27, 29).

7. Rosette conforme à au moins l'une des revendications précédentes **caractérisée par le fait que** les filetages se trouvent à une extrémité axiale du trou de passage (16) de la rosette.

8. Rosette conforme à au moins l'une des revendications précédentes **caractérisée par le fait que** les pièces (12) de la rosette sont formées de manière identique.

9. Rosette conforme à la revendication 7 ou 8 **caractérisée par le fait que** le filet femelle (19) de la rosette est un filetage à nombre pair de spires, notamment un filetage à deux spires.

10. Rosette conforme à au moins l'une des revendications 7 à 9 **caractérisée par le fait que** le filetage de la rosette présente des spires se projetant de sa face interne, de préférence à la manière d'étroites traverses projetants (19), seule une spire sur deux étant formée sur chaque pièce (12) de la rosette, les spires du filetage, de préférence celles le long du plan de joint (22) des pièces de la rosette étant alors placées en déport l'une par rapport à l'autre.

11. Rosette conforme à au moins l'une des revendications précédentes **caractérisée par le fait qu'**elle présente sur sa face interne, à distance constante de l'extrémité qui se trouve du côté du mur lorsqu'elle est montée, une surface d'appui projetant vers l'intérieur et pour l'essentiel périphérique, notamment formée d'un épaulement (24) ou de tout autre dispositif semblable, un joint (13) pouvant être inséré contre le mur sur cette surface, joint pouvant de préférence être défait en sens périphérique à l'instar de la rosette.

12. Rosette conforme à au moins l'une des revendications précédentes **caractérisée par le fait qu'**elle présente sur sa face interne des nervures raidisseuses (19, 23, 24) qui courent notamment en sens périphérique et peuvent être reliées les unes aux autres de préférence lors de la jonction des pièces (12) de la rosette.
